# EUROPEAN PATENT APPLICATION

(11) **EP 4 799 951 A1**
(43) Date of publication of application: **02.09.2026**
(21) Application number: 25160977.2
(22) Date of filing: 28.02.2025
(51) Int. Cl.: B65G 1/04

(54) **A KIT**

(71) Applicant: AutoStore Technology AS, 5578 Nedre Vats (NO)
(72) Inventor: AUSTRHEIM, Trond, 5578 Nedre Vats (NO)
(74) Representative: Kilburn & Strode LLP

(57) **Abstract**

The disclosure relates to a kit for an automated storage and retrieval system. The kit comprising: a support member arranged to lie within an opening of a grid of rails of the automated storage and retrieval system and having an upper surface for supporting human passage and/or a column of one or more storage bins; and one or more first height setters arranged to couple to the support member and set the height of the upper surface of the support member relative to the grid of rails by bearing against one or more of a frame or floor of the automated storage and retrieval system or a storage bin stored within the automated storage and retrieval system.

## Description

### TECHNICAL FIELD

The disclosure relates to a kit for an automated storage and retrieval system. More particularly, it relates to a kit comprising a support member and one or more height setters. The disclosure also relates to an automated storage and retrieval system comprising the kit and a method performed at the automated storage and retrieval system using the kit.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

To provide reliable operation of the automated storage and retrieval system, service personnel or a technician may carry out repair, maintenance, and/or service of various parts of the automated storage and retrieval system. At times, this may be accomplished by service personnel working within the system, such as on top of the grid. However, working on top of the grid presents a potential fall hazard to the service personnel from the openings in the grid used for placing or lifting the bins or containers.

A cover plate can provide a surface which covers these openings to prevent service personnel from falling into the opening and to provide the service personnel more space to stand or walk on top of the grid.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of an automated storage and retrieval system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows a kit for an automated storage and retrieval system.
Fig. 5B shows a grid of the automated storage and retrieval system comprising the kit of Fig. 5A.
Fig. 6A shows the kit of Fig. 5A with a plurality of first height setters coupled to the support member.
Fig. 6B shows a close up side view of the kit of Fig. 6A releasably locked to a frame of an automated storage and retrieval system.
Fig. 6C shows an expanded view of Fig. 6B.
Fig. 7A shows the kit of Fig. 5A with a plurality of second height setters coupled to the support member.
Fig. 7B shows a close up side view of the kit of Fig. 7A releasably locked to a frame of a second automated storage and retrieval system.
Fig. 7C shows an expanded view of Fig. 7B.
Fig. 8A shows a kit bearing upon a bin.
Fig. 8B shows a side view of the kit of Fig. 8A in a grid.
Fig. 9A shows a kit supporting a bin from below.
Fig. 9B shows a side view of the kit of Fig. 9A in a grid.
Fig. 10 shows a method performed at the automated storage and retrieval system comprising a kit.

### DETAILED DESCRIPTION

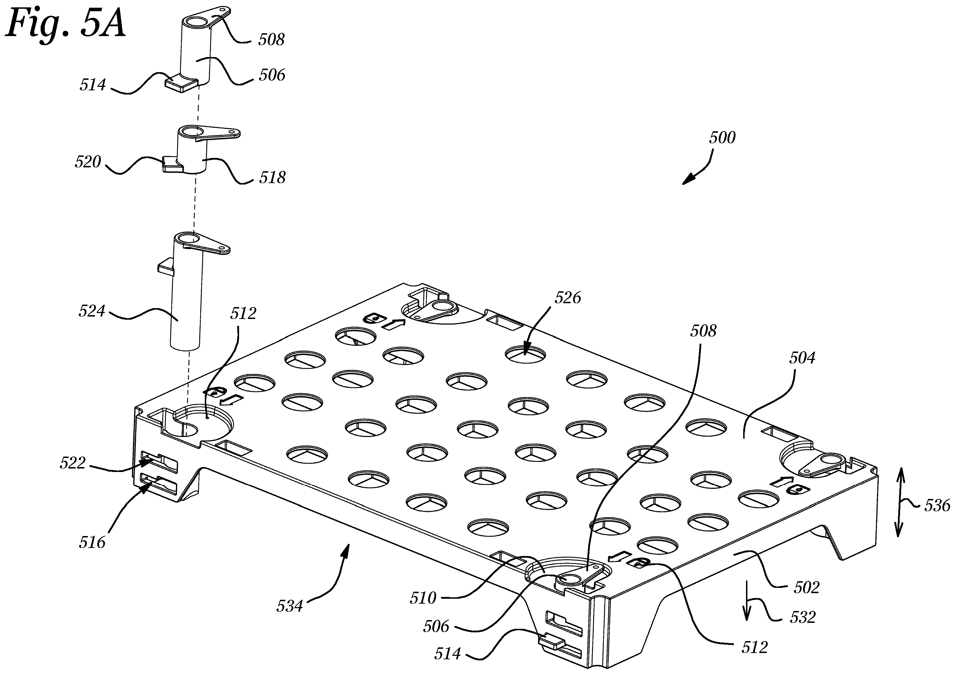

In overview, the disclosure relates to a kit for an automated storage and retrieval system, the kit comprising a support member and one or more first height setters. By providing one or more first height setters which are couplable to the support member, the height of the assembled kit can be adjusted, which enables flexibility for how the kit is used in the automated storage and retrieval system. For example, it can be used on top of the grid to support human passage, allowing service personnel to service the automated storage and retrieval system with improved safety and mobility. In another example, it can be used to support one or more storage bins at the bottom of the grid to provide ventilation between the storage bins and the floor. By providing one or more first height setters which are separable to the support member, the height of the upper surface of the support member can be adjusted depending on its use case, which as will be discussed below, improves the operation of the automated storage and retrieval system. The disclosure also relates to an automated storage and retrieval system comprising the kit as well as a method performed at the automated storage and retrieval system using the kit. This kit will be discussed in detail below with reference to Fig. 5A to Fig. 10.

### Automated storage and retrieval system overview

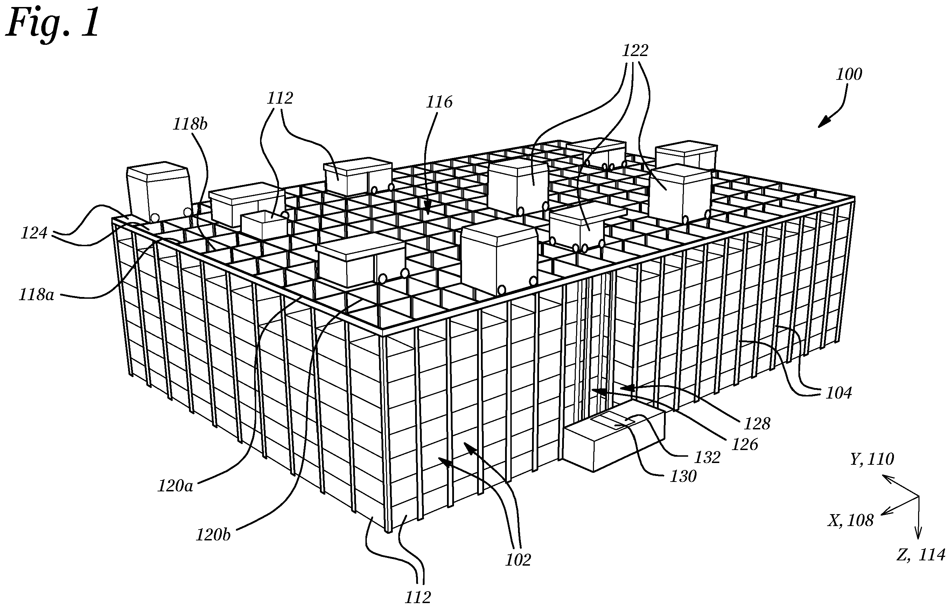

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

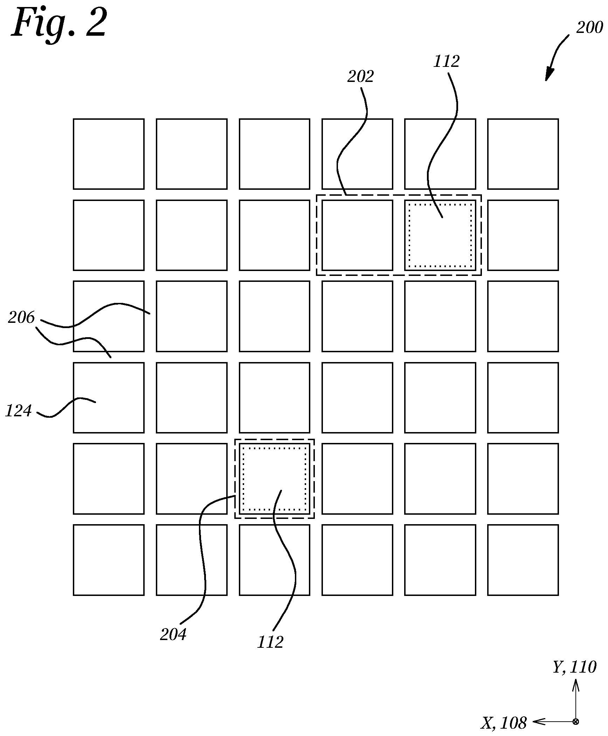

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

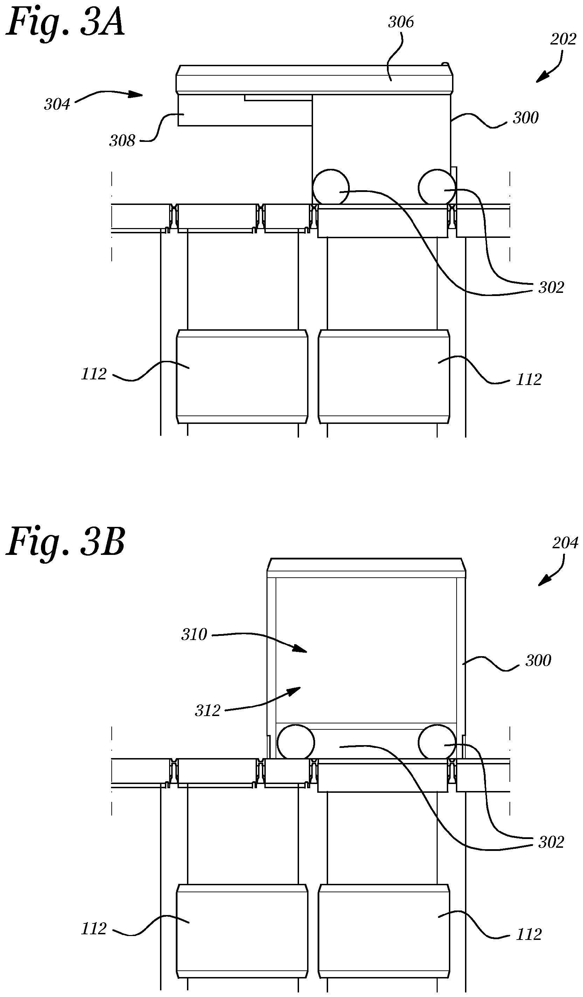

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

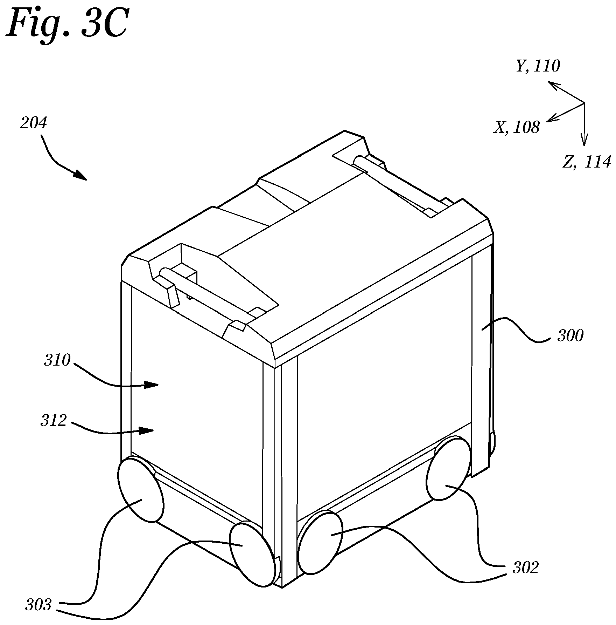

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

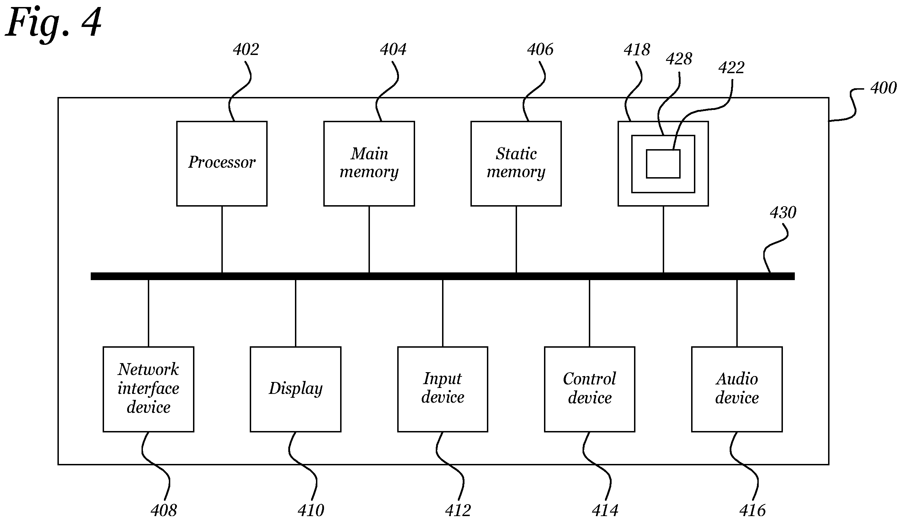

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### The kit

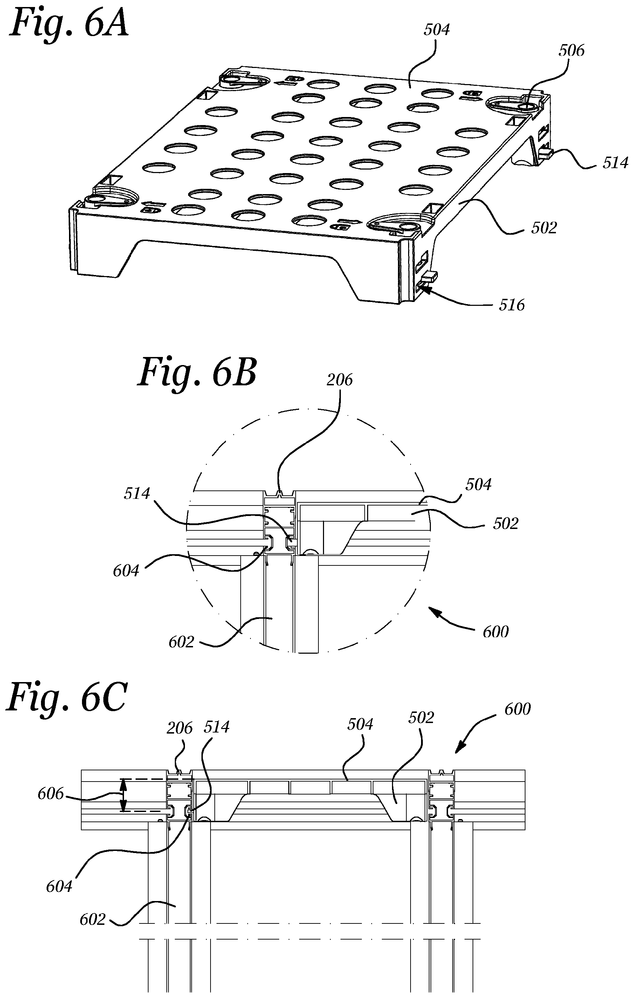

Fig. 5A shows an example kit 500 for an automated storage and retrieval system according to the present disclosure. The kit 500 comprises a support member 502 arranged to lie within an opening of a grid of rails 206 of the automated storage and retrieval system and having an upper surface 504 for supporting human passage and/or a column of one or more storage bins 112. The kit 500 also comprises one or more first height setters 506 arranged to couple to the support member 502 and set the height of the upper surface 504 of the support member 502 relative to the grid of rails 206 by bearing against one or more of a frame or floor of the automated storage and retrieval system or a storage bin 112 stored within the automated storage and retrieval system. In particular, each of the one or more first height setters 506 is arranged to bear against the frame of the automated storage and retrieval system at a respective first distance from a plane containing the support member 502 (see Fig. 6C).

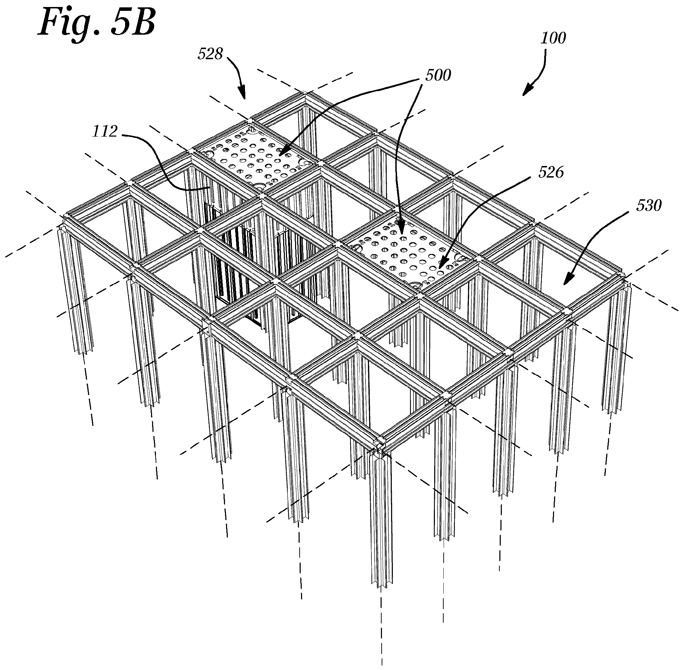

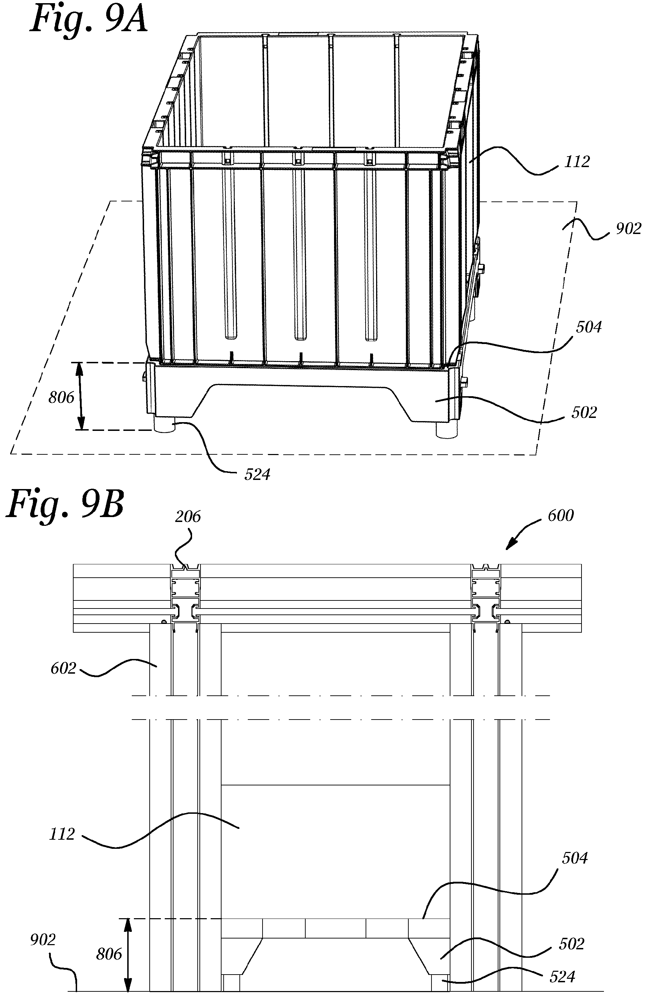

Fig. 5B shows grid 100 of the automated storage and retrieval system comprising the kit 500 of Fig. 5A. In particular, 5B shows a kit 500 assembled/installed in the automated storage and retrieval system in two exemplary ways. In a first example 526, the kit 500 is arranged to lie within an opening 530 of the grid 100 (or grid of rails 206) by bearing against the frame of grid 100. In a second example 528, the kit 500 is arranged to lie within an opening 530 of the grid 100 (or grid of rails 206) by bearing against a storage bin 112 stored within the grid 100. In this case, the storage bin 112 which the kit 500 is resting on top of is the top bin of a column of bins stored in the grid 100. In a third example (see Fig. 9A and Fig. 9B), the kit 500 may be arranged to lie within the opening 530 of the grid 100 (or grid of rails 206) by bearing against a floor of the grid 100 (the horizontal surface which the grid 100 rests upon) to support a column of one or more storage bins 112.

As will be described in detail below with reference to Fig. 6A to Fig. 9B, the kit 500 can be used in various ways and provide different functionality in the automated storage and retrieval system.

In some implementations, as depicted in Fig. 5A, each of the one or more first height setters 506 is rotatably couplable to the support member 502. In some implementations, a flange 508 is provided on each of the one or more first height setters 506, for service personnel to grip onto, to rotatably couple the one or more first height setters 506 to the support member 502. In some implementations, the support member 502 has one or more recessed portions 510 so that the flange 508 can lie substantially flush with the upper surface 504 of the support member 502 when the one or more first height setters 506 are coupled to the support member 502. In some implementations, to further secure each of the one or more first height setters 506 to the support member 502, screws can be used to fix the flange 508 to the support member 502 via one or more screw holes 512.

In some implementations, also depicted in Fig. 5A, each of the one or more first height setters 506 has a projecting portion - in this case a tab 514 - arranged to bear against a corresponding surface of the frame of the automated storage and retrieval system. As will be apparent to the skilled person, instead of a tab 514, it may be any other projecting portion or feature suitable for bearing against the frame of the automated storage and retrieval system. In some further implementations, as depicted in Fig. 5A, for each of the one or more first height setters 506, the support member 502 comprises a corresponding hole 516 through which the projecting portion or tab 514 of that first height setter 506 is arranged to project when that first height setter 506 is coupled to the support member 502. In some implementations, the corresponding hole 516 is shaped so as to couple the projecting portion or tab 514 of that first height setter 506 to the support member 502 via a friction fit.

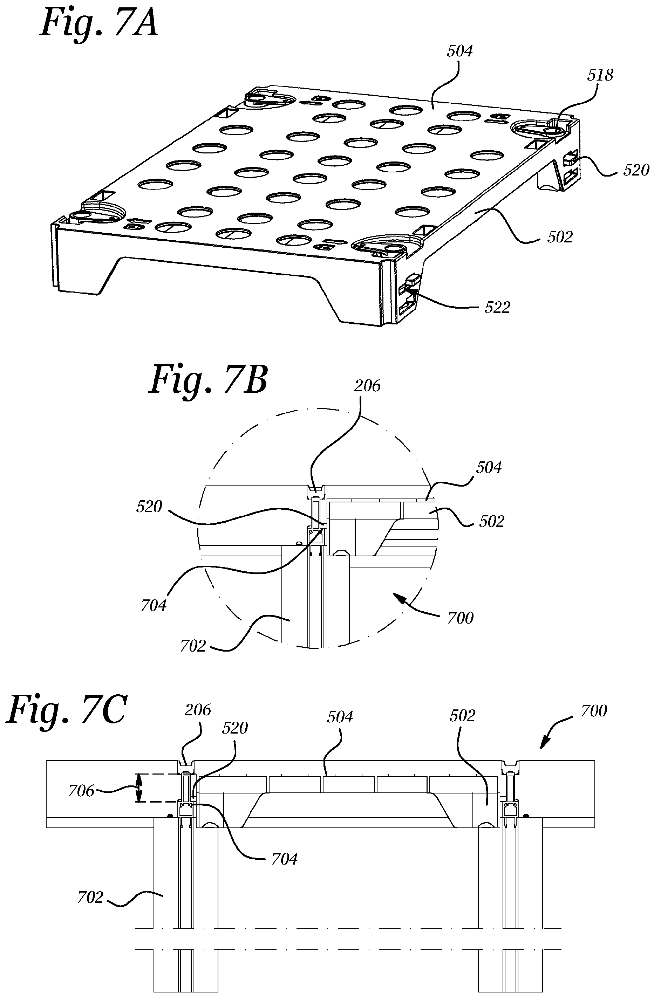

In some implementations, the kit 500 further comprises one or more second height setters 518 arranged to couple to the support member 502 and set the height of the upper surface 504 of the support member 502 relative to a grid of rails 206 of a second automated storage and retrieval system by bearing against one or more of a frame or floor of the second automated storage and retrieval system or a storage bin 112 stored within the second automated storage and retrieval system. In particular, in some implementations, each of the one or more second height setters 518 is arranged to bear against the frame of the second storage and retrieval system at a respective second distance (see Fig. 7C) from a plane containing the support member 502. In some implementations, wherein the kit 500 comprises the one or more first height setters 506 and the one or more second height setters 518, for each of the one or more first height setters 506 the respective first distance (see Fig. 6C) is different to the respective second distance (see Fig. 7C) of a corresponding one of the one or more second height setters 518.

Providing one or more second height setters 518 in addition to the one or more first height setters 506 enables efficient adjustability of the kit 500 between two different height settings while enabling reuse of the support member 502. This is further described below with reference to Fig. 6A to Fig. 7C.

In the same way as the one or more first height setters 506, each of the one or more second height setters 518 may also be rotatably couplable to the support member 502, comprise a flange, comprise a protruding section or a tab 520, wherein, optionally, the protruding section or tab 520 is arranged to project through a corresponding hole 522 of the support member 502.

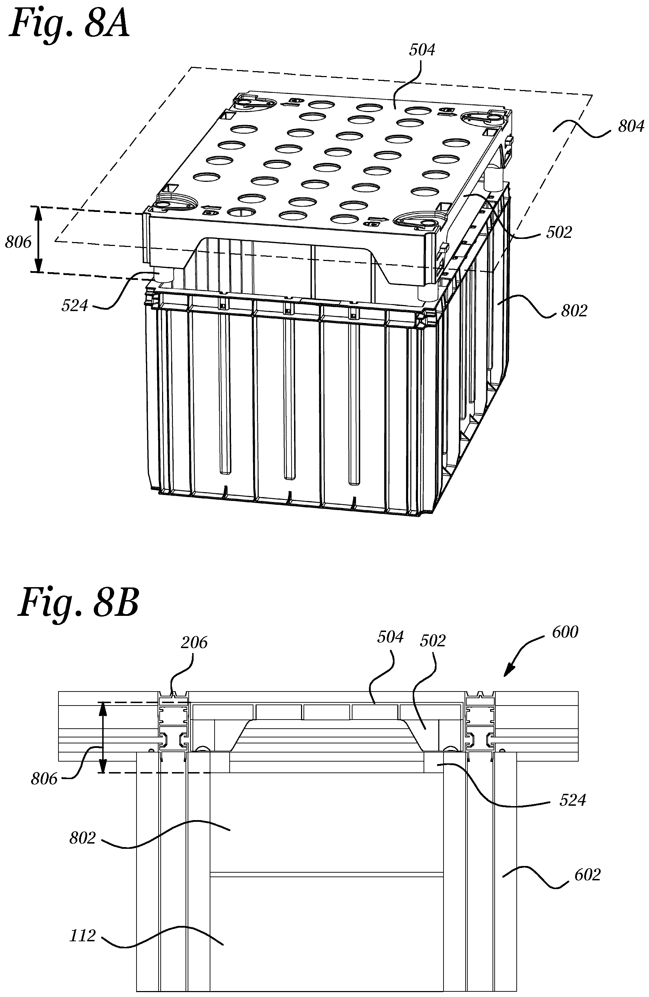

Various aspects of the one or more first height setters 506 and the one or more second height setters 518 have been discussed above. In some implementations, the one or more first height setters 506 and/or the one or more second height setters 518 can be arranged to increase the thickness 536 of the support member 502 when coupled thereto. An example of such a height setter, third height setter 524, which increases the thickness 536 of the assembled kit (to a thickness of 806, see Fig. 8A to 9B) when coupled to the support member 502, is shown in Fig. 5A.

Specifically, each of the one or more first height setters 506 may be arranged, when coupled to the support member 502, to project away from (see direction of arrow 532) and below 534 the upper surface 504 of the support member 502 so that a first thickness of the assembled kit is greater than the thickness 536 of the support member 502. This can be used to provide variable height setting of the upper surface 504 of the support member 502, in particular, when the one or more first height setters 506 are arranged to bear against the floor of the automated storage and retrieval system (see Fig. 9A and Fig. 9B) or a storage bin stored within the automated storage and retrieval system (see Fig. 8A and Fig. 8B).

Similarly, in some implementations, each of the one or more second height setters 518 may also be arranged, when coupled to the support member 502, to project away from and below the upper surface 504 of the support member 502 so that a second thickness of the assembled kit (see Fig 8A to Fig. 9B) is greater than the thickness 536 of the support member 502. In some implementations, this second thickness differs from a first thickness of the assembled kit using the one or more first height setters 506. In some implementations, the thicknesses of the kit 500 assembled using the one or more first height setters 506 or the one or more second height setters 518 may be determined based on the height of bin(s) 112 stored in the automated storage and retrieval system.

In some implementations, when the one or more first height setters 506 and/or the one or more second height setters 518 are arranged to bear upon a top bin of a full column of bins 112 stored in a automated storage and retrieval system, the upper surface 504 of the support member 502 is substantially flush with the grid of rails 206 (see Fig. 8A and Fig. 8B). In some implementations, the thickness 536 of the kit 500 assembled using the one or more first height setters 506 may be one of: 60mm, 80mm, or 120mm, and the thickness 536 of the kit 500 assembled using the one or more second height setters 518 may be another one of: 60mm, 80mm, or 120mm.

In some implementations, in addition or alternatively to the one or more first height setters 506 and the one or more second height setters 518, the kit 500 may comprise any number of one or more further height setters. The one or more further height setters may provide different kit thicknesses when assembled thereto and/or bear against the frame of an automated storage and retrieval system at different respective distances from a plane containing the support member 502.

Referring back to the example of Fig. 5A, the support member 502 is rectangular and the one or more first height setters 506 are a set of four legs each couplable to a respective corner of the support member 502. As will also be apparent to the skilled person, the support member 502 may have different dimensions or shapes. In particular, although Fig. 5A shows a support member 502 with raised corners that project away from below 534 the upper surface 504 of the support member 502, in some implementations, the support member 502 may have a constant thickness 536. As will also be apparent to the skilled person, the one or more first height setters 506 may be coupled to the support member 502 at different positions and/or vary in their number. That is, while the figures typically show four height setters coupled to the support member 502, there may be any number of them, and they may vary in their dimensions, shape, and/or their design. In some implementations, in addition to the support member 502 being arranged to lie within an opening and having an upper surface 504 for supporting human passage, the support member 502 is arranged to substantially block the opening of a grid of rails 206. In some implementations, the support member 502 has holes 526 to allow the passage of a fire suppressant such as water, e.g., from sprinklers when there is a fire.

Fig. 6A shows the kit 500 of Fig. 5A with a plurality of first height setters 506 coupled to the support member 502. More specifically, Fig. 6A shows each of the one or more first height setters 506 rotatably coupled to the support member 502 with a tab 514 which projects through a corresponding hole 516 of the support member 502.

Fig. 6B shows a close up side view of the kit 500 of Fig. 6A releasably locked to a frame 602 of an automated storage and retrieval system 600 (such as grid 100 of Fig. 1). More specifically, Fig. 6B shows the tab 514 bearing against a corresponding surface 604 of the frame 602 of the automated storage and retrieval system 600 so that the upper surface 504 of the support member 502 lies substantially flush with the grid of rails 206. Referring to Fig. 6B, the surface 604 is a ledge which the tab 514 may bear (i.e., rest or be supported) for supporting/distributing the weight or stress applied to support member 502, e.g., from service personnel standing or walking on the support member 502. As will be apparent to the skilled person, surface 604 may be any surface which can be used to support an assembled kit by contact of a protruding part or member of the one or more height setters 506 with a part of the frame. In some implementations, the frame may be shaped/recessed so as to accommodate or facilitate the insertion of a tab 514 into the frame 602. In some implementations, the recession may be a hole or cavity (see frame 602 in Fig. 6B), which can more securely secure the assembled kit by restricting vertical movement of the assembled kit.

Referring to Fig. 6B, in some implementations, the one or more first height setters 506 are arranged to releasably lock the support member 502 to the frame 602 of the automated storage and retrieval system 600. Releasably locking of the support member 502 to the frame 602 refers to an approach by which the support member 502 can be held in place with respect to the frame, and subsequently removed without substantially affecting the condition of the support member 502 or frame. That is, releasably locking describes a means for non-permanently attaching or removing two components from each together. Providing releasable locking of the kit 500 to a frame 602 or grid 100 enables the kit 500 to be in place/installed only when needed, e.g., to perform maintenance and servicing, and to be removed without damaging the kit 500 or automated storage and retrieval system thereafter. In particular, locking the support member 502 to the frame 602 of the automated storage and retrieval system 600 enables the support member 502 to be fixed in place so it is secure when supporting human passage thereon.

In some implementations, the one or more first height setters 506 are arranged to releasably lock the support member 502 to the frame 602 of the automated storage and retrieval system 600 and bear/rest thereagainst so that the upper surface 504 of the support member 502 lies substantially flush with the grid of rails 206. This enables a container-handling vehicle 122 to pass over the support member 502 without it being obstructed. In this way, a surface for supporting human passage is provided without affecting operation of the container-handling vehicle 122 on the automated storage and retrieval system. Additionally, providing a support member 502 that is substantially flush provides a more even walking surface, thereby reducing the risk of a trip hazard for service personnel. As will be apparent to the skilled person, the meaning of substantially flush is that the upper surface 504 of the support member 502 is close to or equal to a top surface of the grid of rails 206. In some implementations, substantially flush is functionally defined such that a container-handling vehicle 122 passing over support member 502 is not obstructed or that it is not or does not cause a trip hazard for a person walking on top of the frame 600 or grid 100. In some implementations, the upper surface 504 of the support member 502 is considered flush if it above or below a top surface of the grid of rails 206 from by no more than 2.5 cm, preferably no more than 1 cm or 0.635 cm (1/4 of an inch). In some implementations, for the upper surface 504 of the support member 502 to be substantially flush it may instead be defined with respect to a top surface of the frame 600 or grid 100 rather than the grid of rails 206.

Fig. 6C shows an expanded view of Fig. 6B. In particular, Fig. 6C shows each of the one or more first height setters 506 arranged to bear against the frame 602 of the automated storage and retrieval system at a respective first distance 606 from a plane containing the support member 502, i.e., the upper surface 504 of the support member 502. However, it will be apparent to the skilled person that instead of the plane containing the support member 502, any plane parallel to the upper surface 504 of the support member 502 may be used to define the first distance 606 between this plane and the plane at which the one or more first height setters 506 bears against the frame 602. For example, the one or more first height setters 506 may be arranged to bear against the frame 602 of the automated storage and retrieval system at a respective first distance from a top surface of the grid of rails 206 or a respective first distance from the floor which the frame 602 (or grid 100) rests upon.

Referring to Fig. 7A, the kit 500 of Fig. 5A with a plurality of second height setters 518 coupled to the support member 502 is shown. More specifically, Fig. 7B shows each of the one or more second height setters 518 rotatably coupled to the support member 502 with a tab 520 which projects through a corresponding hole 522 of the support member 502.

Fig. 7B shows a close up side view of the kit 500 of Fig. 7A releasably locked to a frame 702 of a second automated storage and retrieval system 700 (such as grid 100 of Fig. 1). More specifically, Fig. 7B shows the tab 520 bearing against a corresponding surface 704 of the frame 702 of the second storage and retrieval system 700 so that the upper surface 504 of the support member 502 lies substantially flush with the grid of rails 206. Referring to Fig. 7B, the surface 704 is a ledge which the tab 520 may bear (i.e., rest, be supported, or reinforced against) for supporting/distributing the weight or stress applied to support member 502. This can be from service personnel standing or walking on the support member 502. As discussed in relation to Fig. 6B, it will be apparent to the skilled person that surface 704 may be any surface which can be used to distribute the weight or stress via the one or more height setters 518 against the frame. In some implementations, the frame may be depressed to accommodate or facilitate the insertion of a tab 520 into the frame 702. In some implementations, the frame may have a recession (see frame 702 in Fig. 7B), which can provide space for the tab 520 to rest against the surface 704.

In some implementations, like the one or more first height setters 506, the one or more second height setters 518 are arranged to releasably lock the support member to the frame 702 of the second storage and retrieval system 700 and bear thereagainst so that the upper surface 504 of the support member 502 lies substantially flush with the grid of rails 206 of the second automated storage and retrieval system 700. As discussed with reference to Fig. 6B, providing a support member 502 that is substantially flush provides a more level or flat walking surface, which can improve safety. In some implementations, substantially flush is functionally defined such that a container-handling vehicle 122 passing over support member 502 is not obstructed or that it is not a trip hazard. In some implementations, the upper surface 504 of the support member 502 is considered flush if it is not higher than or lower than a top surface of the grid of rails 206 (or a top surface of the frame 700 or grid 100) by more than 2.5 cm, 1 cm, or 0.635 cm.

Fig. 7C shows an expanded view of Fig. 7B. In particular, Fig. 7C shows each of the one or more second height setters 518 arranged to bear against the frame 702 of the automated storage and retrieval system at a respective second distance 706 from a plane containing the support member 502, i.e., the upper surface 504 of the support member 502. As discussed in relation to Fig. 6C, it will be apparent to the skilled person that any plane parallel to the upper surface 504 of the support member 502 may be used to define the second distance 706 between this plane and the plane at which the one or more second height setters 518 bears against the frame 702.

Referring to Fig. 6A to Fig. 7C, providing a kit comprising both the one or more first height setters 506 and the one or more second height setters 518 enables the height to be adapted for different automated storage and retrieval systems. For example, the automated storage and retrieval systems may have varying rail and/or frame designs. Example rail designs include a single/double layout and a double/double layout. The single/double layout describes a single rail track along one axis, with a double rail track along the other axis. Meanwhile, the double/double layout provides two rails tracks in both axes. The double/double layout enables container-handling vehicles to pass by each other on adjacent/neighbouring rail tracks.

In some implementations, the one or more first height setters 506 can be arranged to set the height of the upper surface 504 of the support member 502 so that the upper surface 504 lies substantially flush with the grid of rails 206 for an automated storage and retrieval system 600 with a single/double layout. Further, the one or more second height setters 518 can be arranged to set the height of the upper surface 504 of the support member 502 so that the upper surface 504 lies substantially flush with the grid of rails for a second automated storage and retrieval system 700 with a double/double layout. In this way, the kit 500 may be adapted towards the underlying storage and retrieval system for which it is used.

While the one or more first height setters 506 and the one or more second height setters 518 have been described to be separate components which may bear against the frame of the automated storage and retrieval system at different distances from a plane containing the support member 502, in some implementations, they can be respectively combined together as a single component. That is, in some implementations, each of one or more first height setters 506 may bear against the frame of the automated storage and retrieval system at both a respective first distance 606 and a respective second distance 706 from a plane containing the support member 502, wherein the respective first distance 606 is different to the respective second distance 706. For example, the one or more first height setters 506 may comprise both tab 514 and tab 520 (which are positioned on the one or more first height setters 506 such that they retain their respective first 606 and second distances 706 from a plane containing the support member 502). In some implementations, tab 514 and tab 520 may be offset radially to each other by, e.g., 90°, 180°, or 270°. This enables the one or more first height setters 506 to bear against the frame of the automated storage and retrieval system at different respective distances from a plane containing the support member based on the (rotational) position of the one or more first height setters 506.

Fig. 8A shows a kit bearing upon a top bin 802 of a full column of bins 112 stored in the automated storage and retrieval system. In this example, one or more third height setters 524 are coupled to the support member 502 to provide an increased kit thickness 806 so that the upper surface 504 of the support member 502 is substantially flush with the plane 804 of the grid of rails 206 (e.g., with respect to a top surface of the grid of rails 206).

Fig. 8B shows a side view of the kit 500 of Fig. 8A in a frame 602 of the automated storage and retrieval system 600. As depicted in Fig. 8B, the assembled kit 500 (specifically the one or more third height setters 524) with thickness 806 is resting against the top bin 802 of the column of bins 112. This assembled kit thickness 806 enables the support 504 to be substantially flush with a top surface of the grid of rails 206 (represented by plane 804 in Fig. 8A). The meaning of substantially flush may be defined as previously discussed with reference to Fig. 6A to 7C.

As discussed above, any number of one or more first 506, second 518, and/or further height setters may be comprised in the kit 500, e.g., determined based on the height of the bin(s) stored in the automated storage and retrieval system. This is so that when the height setters are arranged to bear upon a top bin 802 of a full column of bins 112 stored in an automated storage and retrieval system, the upper surface 504 of the support member 502 is substantially flush with the grid of rails 206. In some implementations, the height setters can be removed from the support member 502 so that the support member 502 alone bears upon the top bin 802 of a full column of bins 112 so that the upper surface 504 of the support member 502 is substantially flush with the grid of rails 206.

Fig. 9A shows a kit comprising one or more third height setters 524 coupled to the support member 502, the one or more third height setters 524 bearing upon a floor 902 of the automated storage and retrieval system and supporting a column of one or more bins 112. The one or more third height setters 524 provide an increased thickness 806 of the assembled kit thereby providing improved ventilation to the bins 112 by elevating the bins 112 from the floor 902.

Fig. 9B shows a side view of the kit 500 of Fig. 9A in a frame 602 of the automated storage and retrieval system 600. As depicted in Fig. 9B, the assembled kit 500 (specifically the one or more third height setters 524) with thickness 806 is resting upon/against the floor 902. The kit 500 is also shown to support a bin 112 but may also support a column of bins 112. As is apparent to the skilled person, the arrangement provided in Fig. 9B can be combined with any of the systems and methods described herein, and in particular to those of Fig. 6A to Fig. 8B.

In some implementations, the one or more first 506, second 518, and/or further height setters are coupled to the support member 502 and arranged to bear upon a floor of the automated storage and retrieval system and support a bin 112 stored within the automated storage and retrieval system. Using height setters which vary the thickness of the assembled kit enables the ventilation provided to the one or more bins 112 which are being supported to be adjusted. In some implementations, the height setters 506 can be removed from the support member 502 so that the support member 502 alone bears upon a floor of the automated storage and retrieval system and supports a bin 112 or column of bins 112 stored within the automated storage and retrieval system.

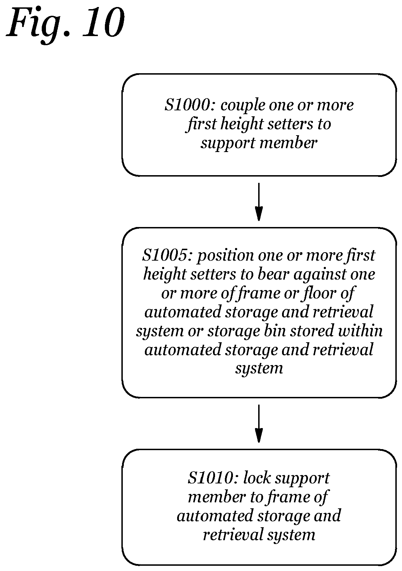

Fig. 10 shows a method performed at the automated storage and retrieval system comprising the kit 500 disclosed herein. In particular, at step 1000, the method comprises coupling the one or more first height setters 506 to the support member 502. At step 1005, the method further comprises positioning the one or more first height setters 506 to bear against one or more of the frame or floor of the automated storage and retrieval system or a storage bin 112 stored within the automated storage and retrieval system so as to set the height of the upper surface 504 of the support member 502 relative to the grid of rails 206.

In some implementations, at step 1010, the method further comprises releasably locking the support member 502 to the frame 602 of the automated storage and retrieval system 600. In some implementations, wherein the one or more first height setters 506 has a projection portion or tab 514, releasably locking the support member 502 to the frame 602 of the automated storage and retrieval system 600 comprises rotatably coupling the one or more first height setters 506 to the support member 502 so that the projecting portion or tab 514 is arranged to bear against a corresponding surface 604 of the frame 602 of the automated storage and retrieval system 600 and to project through a corresponding hole 516 through which the projecting portion or tab 514 of that first height setter 506 is arranged to project. This enables the locking of the support member 502 to the frame 602 of the automated storage and retrieval system 600 to be simultaneously carried out at the same time as coupling the one or more first height setters 506 to the support member 502. In this way, the kit 500 can be installed more efficiently.

In some implementations, the method further comprises placing (bearing) the assembled kit 500 (i.e., the support member 502 coupled to the one or more first height setters 506) upon a top bin 802 of a full column of bins 112 stored in the automated storage and retrieval system so that the upper surface 504 of the support member 502 is substantially flush with the grid of rails 206.

In some implementations, the method further comprises determining which of the one or more first height setters 506 or the one or more second height setters 518 (or one or more further height setters) are the most suitable for bearing upon the top bin 802 of a full column of bins 112 stored in the automated storage and retrieval system. The most suitable height setter may be determined based on the height setter, that when coupled to the support member 502, is arranged so that the upper surface 504 of the support member 502 is substantially flush with the grid of rails 206. This determination may comprise measuring the distance between a top surface of the top bin 802 of the full column of bins 112 to the top surface of the grid of rails 206. In some implementations, this determination may comprise determining the number of and height(s) of the bins 112 stored in the automated storage and retrieval system (including whether a height setter is arranged to bear against the floor of the automated storage and retrieval system to support a bin from below, as described with reference to Fig. 9A and 9B).

In some implementations, if it is determined that none of the height setters when coupled to the support member 502 would make the upper surface 504 of the support member 502 substantially flush with the grid of rails 206 and/or that the column of bins 112 stored in the automated storage and retrieval system is not full, instead of bearing the assembled kit 500 against the top bin 802, the method comprises releasably locking the support member 502 to the frame of the automated storage and retrieval system so that it bears thereagainst such that the upper surface 504 of the support member 502 lies substantially flush with the grid of rails 206. When the kit 500 is in place and is substantially flush in the automated storage and retrieval system, service personnel may walk on and over the kit 500 without risk of falling into the opening 530 or tripping, and container-handling vehicles 122 can pass over the kit 500 without being obstructed.

In some implementations, the method comprises bearing the one or more first height setters 506 or the one or more second height setters 518 (or one or more further height setters) coupled to the support member 502 against a floor 902 or horizontal surface of the automated storage and retrieval system to support a bin 112 or a column of bins 112 stored within the automated storage and retrieval system.

In some implementations, a container-handling vehicle 122 can be used to position or reposition (i.e., pick-up, move, and place) the support member 502 when it is not locked to the frame of the automated storage and retrieval system to bear against one or more of the frame or the floor 902 of the automated storage and retrieval system or a storage bin 112 stored within the automated storage and retrieval system. If needed, the support member 502 can be secured by releasably locking the support member 502 to the frame, as described herein.

While the aforementioned methods describe methods for installing the kit 500 in the automated storage and retrieval system, in some implementations, the method may also comprise corresponding reverse steps for removing the kit 500 from the automated storage and retrieval system. For example, unlocking/releasing the support member 502 from the frame of the automated storage and retrieval system, decoupling the one or more first height setters 506 from the support member 502, lifting the assembled kit 500 from atop a bin 112 or floor 902 which it was bearing upon, using a container-handling vehicle 122 to pick-up and move the assembled kit 500 away, etc.

### Penultimate comments

While various embodiments of the present disclosure has been described with respect to specific height setters, e.g., one or more first 506, second 518, third 524, and further height setters, it is apparent to the skilled person that the height setters used in any of these embodiments can be replaced with any of the one or more first 506, second 518, third 524, and/or further height setters. Further, the kit may comprise any number of sets of the one or more first 506, second 518, third 524, and/or further height setters. Where the kit 500 comprises multiple sets of one or more height setters, they may be interchangeable with each other so as to provide different kit 500 configurations/combinations. Additionally, it is apparent to the skilled person that the various embodiments disclosed herein can apply to any of the grid 100 or automated storage and retrieval systems 600, 700 described herein.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A kit for an automated storage and retrieval system, the kit comprising:
a support member arranged to lie within an opening of a grid of rails of the automated storage and retrieval system and having an upper surface for supporting human passage and/or a column of one or more storage bins; and
one or more first height setters arranged to couple to the support member and set the height of the upper surface of the support member relative to the grid of rails by bearing against one or more of a frame or floor of the automated storage and retrieval system or a storage bin stored within the automated storage and retrieval system.

2. The kit of claim 1, wherein the one or more first height setters are arranged to releasably lock the support member to the frame of the automated storage and retrieval system and bear thereagainst so that the upper surface of the support member lies substantially flush with the grid of rails.

3. The kit of any preceding claim, wherein each of the one or more first height setters is rotatably couplable to the support member.

4. The kit of any preceding claim, wherein each of the one or more first height setters has a projecting portion or tab arranged to bear against a corresponding surface of the frame of the automated storage and retrieval system.

5. The kit of claim 4, wherein, for each of the one or more first height setters, the support member comprises a corresponding hole through which the projecting portion or tab of that first height setter is arranged to project when that first height setter is coupled to the support member.

6. The kit of any preceding claim, wherein each of the one or more first height setters is arranged, when coupled to the support member, to project away from and below the upper surface of the support member so that a first thickness of the assembled kit is greater than the thickness of the support member.

7. The kit of claim 6, wherein the one or more first height setters are arranged to bear upon a top bin of a full column of bins stored in the automated storage and retrieval system so that the upper surface of the support member is substantially flush with the grid of rails.

8. The kit of any preceding claim, further comprising one or more second height setters arranged to couple to the support member and set the height of the upper surface of the support member relative to a grid of rails of a second automated storage and retrieval system by bearing against one or more of a frame or floor of the second automated storage and retrieval system or a storage bin stored within the second automated storage and retrieval system.

9. The kit of claim 8 wherein the one or more second height setters are arranged to releasably lock the support member to the frame of the second automated storage and retrieval system and bear thereagainst so that the upper surface of the support member lies substantially flush with the grid of rails of the second automated storage and retrieval system.

10. The kit of any of claims 8 to 9, wherein each of the one or more second height setters is rotatably couplable to the support member.

11. The kit of any of claims 8 to 10, wherein each of the one or more second height setters has a projecting portion or tab arranged to bear against a corresponding surface of the frame of the second automated storage and retrieval system, optionally wherein, for each of the one or more second height setters, the support member comprises a corresponding hole through which the projecting portion or tab of that second height setter is arranged to project when that second height setter is coupled to the support member.

12. The kit of any of claims 8 to 11, wherein:
each of the one or more first height setters is arranged to bear against the frame of the automated storage and retrieval system at a respective first distance from a plane containing the support member;
each of the one or more second height setters is arranged to bear against the frame of the second automated storage and retrieval system at a respective second distance from a plane containing the support member; and
for each of the one or more first height setters the respective first distance is different to the respective second distance of a corresponding one of the one or more second height setters.

13. The kit of any of claims 8 to 12 as dependent on claim 6, wherein each of the one or more second height setters is arranged, when coupled to the support member, to project away from and below the upper surface of the support member so that a second thickness of the assembled kit is greater than the thickness of the support member and wherein the second thickness differs from the first thickness.

14. An automated storage and retrieval system comprising the kit of any preceding claim.

15. A method performed at the automated storage and retrieval system of claim 14, the method comprising:
coupling the one or more first height setters to the support member; and
positioning the one or more first height setters to bear against one or more of the frame or floor of the automated storage and retrieval system or a storage bin stored within the automated storage and retrieval system so as to set the height of the upper surface of the support member relative to the grid of rails.
